(19) Europäisches Patentamt
European Patent Office
Office européen des brevets

(11) EP 3 531 582 A1

(12) **EUROPEAN PATENT APPLICATION**

(43) Date of publication:
28.08.2019 Bulletin 2019/35

(51) Int Cl.:
*H04B 10/079* (2013.01)    *H04B 10/61* (2013.01)

(21) Application number: 18305209.1

(22) Date of filing: 27.02.2018

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD TN

(71) Applicant: Nokia Solutions and Networks Oy
02610 Espoo (FI)

(72) Inventors:
• DELEZOIDE, Camille
91620 Nozay (FR)
• BIGO, Sebastien
91620 Nozay (FR)

(74) Representative: Script IP Limited
Turnpike House
18 Bridge Street
Frome Somerset BA11 1BB (GB)

(54) **OPTICAL NETWORK COMPONENT ALIGNMENT ADJUSTMENT**

(57) Aspects and embodiments relate to an optical communication network control method, operable to adjust one or more lasers configured to create a lightpath carrying a signal on a channel between a transmitting node and receiving node in the optical communication network. Aspects and embodiments also provide a computer program product and network control node operable to perform the method. The method comprises: receiving, at the receiving node, a signal being transmitted by one of the lasers at the transmitting node; determining an indication of symmetry of a spectral envelope of the received signal at the receiving node; and instructing adjustment of the one or more lasers in dependence upon the determined indication of symmetry of the spectral envelope. The first aspect recognises that an indication of filtering and other effects upon a lightpath can be given by symmetry of a spectral envelope received. In particular, the first aspect recognises that corrective alignment steps may be taken based on a determination of symmetry.

FIG. 3

EP 3 531 582 A1

## Description

FIELD OF THE INVENTION

Aspects and embodiments relate to an optical communication network control method, operable to adjust one or more lasers configured to create a lightpath carrying a signal on a channel between a transmitting node and receiving node in the optical communication network. Aspects and embodiments also provide a computer program product and network control node operable to perform the method.

BACKGROUND

Increasing capacity needs of optical communication pushes networks to evolve towards more spectrally-efficient links. Coherent optical transmission technology may allow for 100G to 400G channel capacity with 37.5GHz spacing. Such capacity upgrades are typically restrained, not by propagation distance, but by filter impairments due to the crossing of routing nodes in the context of transparent optical networks.

Accumulation of optical filters along a lightpath (LP) results in a filter cascade effect. A filter cascade, comprising optical filters inside routing nodes, operates to attenuate outer parts of a transmitted channel, with growing consequences as the number of cascaded filters increase. Those consequences include, for example: increased channel attenuation, hence a decreased OSNR and consequently an increased BER; inter-symbol interference (ISI) due to generated spectral distortion; and attenuation of the clock signal, which is typically transmitted at half the baudrate. It will be appreciated that although ISI can be partially or entirely mitigated upon reception thanks to equalization techniques, the process still significantly increases the BER compared to a case where filtering is negligible. It will also be appreciated that when a clock signal is overly attenuated by a filter cascade, the clock recovery block of any digital signal processing (DSP) fails and the lightpath is disrupted.

It will be appreciated that in some implementations of coherent transponders, clock signal attenuation is the dominant filter related-issue. This issue limits the number of filters that can be cascaded, hence the reach of coherent lightpaths. It will be appreciated that the limitation would not be as severe if the filter cascade was perfectly and constantly aligned (in the frequency domain) with a spectral envelope of a channel.

It is desired to provide a method to address one or more of the issues which flow from misalignment outlined above.

SUMMARY

Accordingly, a first aspect provides an optical communication network control method, operable to adjust output wavelength of one or more lasers configured to create a lightpath carrying a signal on a channel between a transmitting node and receiving node in the optical communication network; the method comprising: receiving, at the receiving node, a signal being transmitted by one of the lasers at the transmitting node; determining an indication of symmetry of a spectral envelope of the received signal at the receiving node; and instructing adjustment of output wavelength of the one or more lasers in dependence upon the determined indication of symmetry of the spectral envelope.

In typical coherent optical transponders, lasers used at both transmitters (Tx) and receivers (Rx), are such that their frequency can typically vary, for example, +/-1.5GHz around a central channel frequency defined by the ITU standard. Both Tx and Rx laser frequencies can thus take any value in this interval from the moment a lightpath is turned on, and can fluctuate within the same interval during the lightpath lifetime. Such misalignments between Tx and Rx laser frequencies can be corrected by appropriate use of a carrier frequency estimation (CFE) block of the DSP. Correction guarantees that coherent transmission is not severely impaired by Tx/Rx detuning.

Significant problems can, however, arise if a Tx laser frequency is not aligned with a central frequency of a filter cascade. In such a situation, the signal is asymmetrically filtered, and available bandwidth is reduced by the amount of detuning between Tx laser and filter cascade which results in clock loss and transponder outage, or a performance penalty.

Such problems can be made worse if cascaded filters are not themselves perfectly aligned with the ITU grid, with central frequencies given at +/-3GHz at best.

Accordingly, a Tx laser and filter cascade can be detuned by up to 4.5GHz, resulting in a reduction of up to 30% of the available bandwidth and an attenuation of a clock signal up to 40dB when compared to an arrangement in which a Tx laser and filter cascade are perfectly aligned.

Misalignment issues between a Tx laser and filter cascade can also impose severe constraints on required frequency accuracy for lasers and filters in an optical network.

Those constraints help to ensure a lightpath correctly operates during its lifetime but result in a higher transponder cost. An arrangement capable of guaranteeing steady and correct alignment of Tx laser with a filter cascade may allow for the use of cheaper components in overall transponder and network design.

The first aspect recognises that an indication of filtering and other effects upon a lightpath can be given by symmetry of a spectral envelope received. In particular, the first aspect recognises that corrective alignment steps may be taken based on a determination of symmetry. For example, the magnitude of any asymmetry and the direction of the asymmetry can be used to determine an appropriate corrective alignment step to be taken either by a transmission or reception laser. For example, the greater the magnitude of the asymmetry, the larger the corrective adjustment. That is to say, the magnitude of the asymmetry and the magnitude of the corrective adjustment may be proportional. Similarly, of the alignment of the components results in an asymmetrical shift upwards in frequency peak of a spectral envelope, a corrective step may appropriately be chosen to shift one or more of the transmission and reception laser frequency downwards. It will be appreciated that adjustment of output wavelength/frequency of a laser can be implemented by adjusting laser current and/or temperature. Furthermore, it will be appreciated that adjustment of wavelength is equivalent to adjustment of frequency. Where reference is made to adjustment of output wavelength, it will be appreciated that is equivalent to adjustment of transmission frequency. In either case, adjustment is achieved by appropriate alteration of laser current and/or temperature.

A first aspect may provide an optical communication network control method. The method may operate to adjust output wavelength or frequency of one or more lasers configured to create a lightpath carrying a signal on a channel between a transmitting node and receiving node in the optical communication network. In particular, the method may operate to adjust the frequency or wavelength of transmission of one or more lasers in the network. The adjustable lasers may, for example, comprise a transmission node laser. The adjustable lasers may, for example, comprise a corresponding reception node laser. The lightpath between transmission and reception nodes may include a plurality of optical filters, operable to keep the lightpath substantially within the channel. The plurality of optical filters may together form a filter cascade. The filter cascade may be misaligned in terms of central frequency/wavelength with a central frequency or wavelength of one or more of the transmission and/or reception node lasers.

The method may comprise: receiving, at the receiving node, a signal being transmitted by one of the lasers at the transmitting node. That receiving node may, in some implementations, itself comprise a laser configured to "retransmit" the signal.

The method may comprise: determining an indication of symmetry of a spectral envelope of the received signal at the receiving node. It will be appreciated that an optical signal will be received at a receiving node and that received signal have a frequency (wavelength) and power spread. Looking at the shape of the spectral envelope may offer an indication of the alignment of the components of the network between transmitting and receiving nodes, for example, one or more filters or electrical filtering artefacts. A method according to the first aspect may comprise instructing adjustment of output wavelength or frequency of the one or more lasers in dependence upon the determined indication of symmetry of the spectral envelope. In particular, the instruction may comprise an instruction to adjust transmission frequency or wavelength of the one or more lasers.

According to some embodiments, determining of an indication of symmetry of a spectral envelope of the received signal at the receiving node comprises: calculating a first order moment of the signal at the receiving node. The first-order moment $M_1$ of a spectral envelope of a signal at the receiving node, may be measured right after an ADC. $M_1$ may also be called the "center of mass" of the spectral envelope. It will be appreciated that $M_1$ will characteristically be equal to zero when the spectral envelope of a received signal is symmetric. That symmetric scenario will only occur if Tx laser, Rx laser and filter cascade are perfectly aligned. Arrangements operate to try to take steps to change the system such that measurements converge towards a $M_1$ value as close to zero as possible. Arrangements are generally such that they assume $M_1$ vs Tx laser frequency can be very closely approximated to a linear function, for which the slope and ordinate at origin are initially unknown. Adjustment of the one or more lasers may be selected (for example, via a look up table) or calculated based on the determined first order moment of the received signal spectral envelope. Adjustment may be instructed based on the determined first order moment of the received signal spectral envelope. It will be appreciated that any appropriate measure of asymmetry or symmetry of the spectral envelope may be used in accordance with aspects and embodiments described. For example, although use of first order moment and centre of mass is described, it is possible to use, for example, an indication of position of a peak relative to the central point of an entire envelope; a higher order moment, a median frequency or wavelength of the envelope; and average frequency or wavelength compared to a central point of the spectral envelope; or any appropriate measure of symmetry.

According to some embodiments, instructing adjustment of the one or more lasers in dependence upon the determined indication of symmetry of the spectral envelope comprises: instructing adjustment of output wavelength or frequency of the one or more lasers an amount directly proportional to the determined indication of symmetry or asymmetry. For example, the indication of symmetry or asymmetry may comprise a magnitude and/or direction upon which an adjustment of output wavelength or frequency of the one or more lasers may be based.

According to some embodiments, instructing adjustment of output wavelength or frequency of the one or more lasers in dependence upon the determined indication of symmetry of the spectral envelope comprises: instructing adjustment of both of the one or more lasers the same amount. Accordingly, output wavelength or frequency of both a transmission and reception node laser may be moved a similar amount. That arrangement may work particularly in the instance that a gross alignment adjustment has already occurred to bring the Tx and Rx lasers into nominal alignment and thus further adjustment may be to try to align the Tx and Rx lasers with the central point of the filter cascade and electrical filtering. It will be appreciated that in some implementations it may be inappropriate to adjust the Tx and Rx lasers the same amount.

According to some embodiments, the method comprises: determining a further indication of symmetry of a spectral envelope of a further received signal at the receiving node, the further received signal resulting from the instructed adjustment of output wavelength of said one or more lasers; and instructing adjustment of output wavelength of the one or more lasers in dependence upon a relationship between instructed adjustment of output wavelength and the determined indication of symmetry, the relationship allowing for selection of an adjustment of the one or more lasers such that the spectral envelope is substantially symmetrical. The relationship may, for example, be a model relationship between adjustment and symmetry of spectral envelope. That model relationship may comprise a linear relationship or, for example, a polynomial relationship. The adjustment may allow for interpolation, extrapolation or similar between two or more measured indications of symmetry of spectral envelope and associated laser adjustment values. It will be appreciated that repeated measurements may be made such that adjustment allows for an iterative process moving the system towards laser settings in which the spectral envelope is substantially symmetrical.

According to some embodiments, the method comprises: determining a further indication of symmetry of a spectral envelope of a further received signal at the receiving node, the further received signal resulting from the instructed adjustment of the one or more lasers; and instructing adjustment of the one or more lasers in dependence upon an interpolation or extrapolation between the indication of symmetry and the further indication of symmetry, the interpolation or extrapolation selecting an adjustment of the one or more lasers such that the spectral envelope is substantially symmetrical. Accordingly, it will be appreciated that the laser adjustment process may be an iterative process, where an adjustment is made and the symmetry of the resulting spectral envelope determined before any further adjustment is made. In some arrangements, the interpolation or extrapolation is linear. In some embodiments, two points relating symmetry of spectral envelope and adjustment to each other may be used to perform extrapolation or interpolation. In some embodiments, a plurality of points relating symmetry of spectral envelope and adjustment to each other may be used to perform extrapolation or interpolation. In some embodiments, an iterative process may be used to move determined asymmetry of spectral envelope towards symmetry. In some embodiments, adjustment may be selected based on determined asymmetry associated with adjustment to move directly to an adjustment at which the spectral envelope might be likely to be symmetrical.

According to some embodiments, instructing adjustment comprises instructing an adjustment at the one or more lasers such that the calculated first order moment is substantially zero. Accordingly, adjustment may be repeated until the first order moment is determined to be substantially zero, meaning the received signal is substantially symmetrical and the components are substantially aligned. It will be appreciated that any measure by which the spectral envelope is determined to be symmetrical may be chosen.

According to some embodiments, the method comprises: determining an indication of wavelength misalignment between a transmission laser and a reception laser configured to create the lightpath in the optical communication network; and instructing a preliminary adjustment of output wavelength of the transmission and/or reception laser in dependence upon the determined indication of wavelength misalignment, before the determining of the indication of symmetry of a spectral envelope of the received signal at the receiving node; and instructing further adjustment of output wavelength of the transmission laser and/or reception laser in dependence upon the determined indication of symmetry of the spectral envelope. Accordingly, one implementation may provide for a first "gross" misalignment correction before use of the spectral envelope symmetry to provide finer adjustments to the system. Such an implementation may provide a particularly efficient means to ensure adjustments converge to an arrangement in which the symmetry of the spectral envelope is determined to indicate the spectral envelope is symmetrical.

According to some implementations, the method may not be implemented until or unless the system misalignment has passed a preselected threshold. Accordingly, unnecessary and/or continuous adjustment may be restricted, leading to less demand on network resource. Such a threshold may, for example, relate to a gross misalignment determined between transmission and reception lasers, and/or a threshold indication of symmetry or asymmetry.

According to some embodiments, the method comprises: maintaining an indication of an average indication of frequency or wavelength misalignment between a transmission and reception laser configured to create the lightpath in the optical communication network; and triggering the instruction of adjustment if the averaged indication of misalignment of passes a threshold value.

According to some embodiments, the method comprises: maintaining an indication of an average indication of symmetry of the spectral envelope of the received signal at the receiving node and triggering the instruction of adjustment if the averaged indication of symmetry passes a threshold value.

According to some implementations, the method may include safeguards to prevent adjustments impacting upon the lightpath itself or adjacent lightpaths. In this way, overall network operation and efficiency can be maintained.

According to some embodiments, the step of instructing adjustment is subject to determining whether an adjustment calculated in dependence upon the determined indication of symmetry of the spectral envelope is within a range selected to prevent disruption to one or more adjacent channels between the transmitting node and receiving node.

According to some embodiments, the method comprises: monitoring an error rate in one or more adjacent channels between the transmitting node and the receiving node after each the step of instructing adjustment, and preventing further instruction of adjustment if the monitored error rate passes a threshold.

According to some embodiments, the method comprises: monitoring a shape of one or more edges of the spectral envelope of the received signal at the receiving node for overlap with adjacent channels between the transmitting node and the receiving node, and preventing further instruction of adjustment if the shape of one or more edges passes a threshold.

According to some embodiments, the method comprises preventing instruction of adjustment based on any combination of one or more of the safeguarding methods outlined above.

A second aspect provides a computer program product operable, when executed on a computer, to perform the method of the first aspect.

A third aspect provides an optical communication network control node, configured to adjust output wavelength of one or more lasers which create a lightpath carrying a signal on a channel between a transmitting node and receiving node in the optical communication network; the network control node comprising: reception logic configured to receive, at the receiving network control node, a signal being transmitted by one of the lasers at the transmitting node; determination logic configured to determine an indication of symmetry of a spectral envelope of the received signal at the receiving node; and adjustment logic configured to instruct adjustment of output wavelength of the one or more lasers in dependence upon the determined indication of symmetry of the spectral envelope.

According to some embodiments, the determination logic is configured to calculate a first order moment of the signal at the receiving node.

According to some embodiments, the adjustment logic is configured to instruct adjustment of the one or more lasers in dependence upon the determined indication of symmetry of the spectral envelope by: instructing adjustment of the one or more lasers an amount directly proportional to the determined indication of symmetry.

According to some embodiments, the adjustment logic is configured to instruct adjustment of the one or more lasers in dependence upon the determined indication of symmetry of the spectral envelope by instructing adjustment of both of the one or more lasers the same amount.

According to some embodiments, the determination logic may be further configured to determine indication of symmetry of a spectral envelope of a further received signal at the receiving node, the further received signal resulting from the instructed adjustment of the one or more lasers; and the adjustment logic may be configured to instruct adjustment of the one or more lasers in dependence upon a linear interpolation between the indication of symmetry and the further indication of symmetry, the linear interpolation selecting an adjustment of the one or more lasers such that the spectral envelope is substantially symmetrical.

According to some embodiments, the adjustment logic is configured to instruct adjustment at the one or more lasers such that the calculated first order moment is substantially zero.

According to some embodiments, the determination logic may be configured to determine an indication of misalignment between a transmission and reception laser configured to create the lightpath in the optical communication network; and the adjustment logic is configured to instruct a preliminary adjustment of the one or more lasers in dependence upon the determined indication of misalignment, before the determining of the indication of symmetry of a spectral envelope of the received signal at the receiving node; and the adjustment logic may be configured to instruct further adjustment of the one or more lasers in dependence upon the determined indication of symmetry of the spectral envelope.

According to some embodiments, the control node comprises: threshold logic configured to maintain an indication of an average indication of misalignment between a transmission and reception laser configured to create the lightpath in the optical communication network; and trigger the instruction of adjustment if the averaged indication misalignment of passes a threshold value.

According to some embodiments, the method comprises: maintaining an indication of an average indication of symmetry of the spectral envelope of the received signal at the receiving node and triggering the instruction of adjustment if the averaged indication of symmetry passes a threshold value.

According to some embodiments, the step of instructing adjustment is subject to determining whether an adjustment calculated in dependence upon the determined indication of symmetry of the spectral envelope is within a range selected to prevent disruption to one or more adjacent channels between the transmitting node and receiving node.

According to some embodiments, the network node comprises: safeguard logic configured to monitor an error rate in one or more adjacent channels between the transmitting node and the receiving node after each the step of instructing adjustment, and preventing further instruction of adjustment if the monitored error rate passes a threshold.

According to some embodiments, the network node comprises: safeguard logic configured to monitor a shape of one or more edges of the spectral envelope of the received signal at the receiving node for overlap with adjacent channels between the transmitting node and the receiving node, and preventing further instruction of adjustment if the shape of one or more edges passes a threshold.

According to some embodiments, the safeguard logic comprises preventing instruction of adjustment based on any combination of one or more of the safeguarding methods outlined above.

A fourth aspect provides: an optical communication network monitoring method for monitoring a lightpath carrying a signal on a channel between a transmitting node and receiving node in the optical communication network; the method comprising: receiving, at the receiving node, a signal being transmitted by the transmitting node; determining an indication of symmetry of a spectral envelope of the received signal at the receiving node; and reporting the determined indication of symmetry to a network control node.

The fourth aspect recognises that an indication or symmetry or asymmetry of a lightpath in an optical communications network may comprise a more generally useful metric. In particular, rather than using the asymmetry of a spectral envelope of a received lightpath to adjust transmission characteristics of components in the network responsible for creation and maintenance of that lightpath, the metric itself may be useful in the control plane. The metric may offer an indication, for example, of lightpath quality in a netork. The metric may be used for network diagnostics in various scenarios. Passing an indication of symmetry or asymmetry of a spectral envelope of a lightpath to the control plane of an optical communication network may allow for that information to leverage decisions made in the control plane. The metric may, for example, offer the control plane a better estimate of what is visible (or not) within a network.

In some embodiments, the reporting may comprise periodic reporting.

In some embodiments, reporting may comprise continuous reporting.

In some embodiments, reporting may comprise reporting when requested by the control node. That is to say, the method may comprise receiving a request for a report and reporting in response to that request.

In some embodiments, the reporting may comprise reporting if an instantaneous indication of symmetry passes a threshold value.

In some embodiments, the method comprises: maintaining an indication of an average indication of symmetry of the spectral envelope of the received signal at the receiving node.

In some embodiments, the reporting may comprise reporting if the averaged indication of symmetry passes a threshold value.

A fifth aspect provides a computer program product operable, when executed ona computer, to perform the method of the fourth aspect.

A sixth aspect provides an optical communication network node configured to monitor a lightpath carrying a signal on a channel between a transmitting node and receiving node in the optical communication network; the network node comprising: reception logic operable to receive, at the receiving node, a signal being transmitted by the transmitting node; determination logic configured to determine an indication of symmetry of a spectral envelope of the received signal at the receiving node; and communication logic configured to report the determined indication of symmetry to a network control node.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

> **Figure 1** illustrates schematically deterioration of signal quality due to routing nodes in a typical transparent optical network;
>
> **Figure 2** illustrates graphically an assessment one possible solution to deterioration of signal quality using simulations, (a) assuming flat electrical filtering at reception, and (b) when experimentlly-characterized electrical filtering is considered;
>
> **Figure 3** illustrates graphically values of a centre of mass $M_1$ of a spectral envelope of a received signal during various stages of a possible alignment procedure. By linear interpolation, appropriate correction is deduced from monitored values and can be applied in a final step of the possible procedure;
>
> **Figure 4** illustrates graphically PSD of a channel of interest in presence of crosstalk from an adjacent channel on a lower frequency. When detuning between a channel and ITU grid increases, crosstalk from adjacent channels increases. At oGHz-detuning it can be seen channels are 37.5GHz apart;
>
> **Figure 5** illustrates graphically left edge to peak ratio as a function of detuning of a channel compared to ITU grid;
>
> **Figure 6** illustrates graphically how three-steps of an alignment procedure may operate to correct a random initial state and obtain good alignment between Tx laser, Rx laser and filter cascade; and
>
> **Figure 7** represents a graphical assessment of robustness of an alignment control algorithm when a Tx laser is independently detuned to reproduce natural variations of typical commercial lasers.

DESCRIPTION OF THE EMBODIMENTS

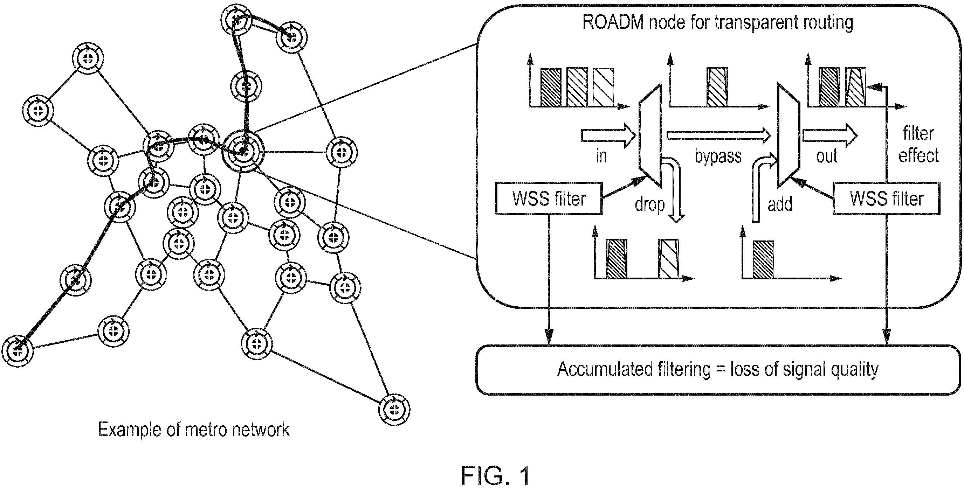

Figure 1 illustrates schematically deterioration of signal quality due to routing nodes in a typical transparent optical network. Accumulation of optical filters along a lightpath (LP) results in a filter cascade effect. A filter cascade, comprising optical filters inside routing nodes, operates to attenuate outer parts of a transmitted channel, with growing consequences as the number of cascaded filters increase. Those consequences include, for example: increased channel attenuation, hence a decreased OSNR and consequently an increased BER; inter-symbol interference (ISI) due to generated spectral distortion; and attenuation of the clock signal, which is typically transmitted at half the baudrate.

Misalignment issues between a Tx laser and filter cascade can also impose severe constraints on required frequency accuracy for lasers and filters in an optical network. Those constraints help to ensure a lightpath correctly operates during its lifetime but result in a higher transponder cost. An arrangement capable of guaranteeing steady and correct alignment of Tx laser with a filter cascade may allow for the use of cheaper components in overall transponder and network design.

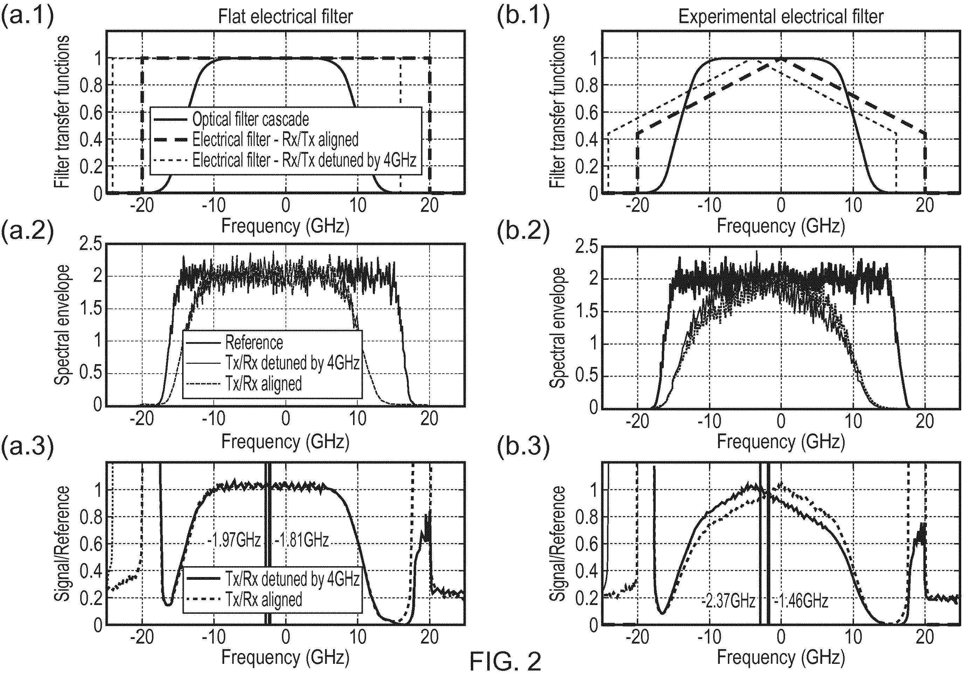

Figure 2 illustrates graphically an assessment one possible solution to deterioration of signal quality using simulations, (a) assuming flat electrical filtering at reception, and (b) when experimentlly-characterized electrical filtering is considered. Misalignment between a Tx laser and filter cascade can be addressed by using a feedback loop between a Rx node and Tx node. Once the lightpath is active, an offset between the Tx laser and the filter cascade can be determined by comparing the spectral envelope of the received signal with a theoretical template, that theoretical template corresponding to the theoretical spectral envelope associated with the modulation format of the transmitted signal. The Tx laser can then be shifted by the determined offset so that the Tx laser and filter cascade are aligned. Such an approach inherently assumes that the signal measured at reception is only filtered by the optical filter cascade and neglects electrical filtering from a receiver frontend (for example occurring as a result of the presence of photodiodes, amplifiers, ADCs and similar).

Simulations to assess such solutions can be performed and the spectral envelope at the receiver can be measured, for example, in two situations: (i) Tx and Rx lasers are aligned; (ii) Tx and Rx lasers are detuned by 4 GHz. In both situations, it will be appreciated that the detuning between Tx laser and filter cascade is the same, for example, it may be equal to -2GHz.

To illustrate issues with such a simplified approach, it is possible to measure an electrical filter function of a laboratory coherent receiver sampling at 40GSamples/s. Consider an arrangement according to which transmission of a 32.5GBd PDM-QPSK crosses an optical filter cascade composed of ten filters with 37.5GHz bandwidth.

Figure 2 illustrates graphically measurements made to analyse misalignment feedback methods. Figure 2 shows a comparison of a case where: (a) electrical filter effects are assumed to be flat and (b) a case where electrical filter effects are based on an experimental characterization. It is assumed for simplicity that the Tx laser frequency is constant and perfectly aligned with the ITU grid. Zero-frequency in the plots of Figure 2 therefore corresponds to the centre of the signal at Tx output.

Figure 2 shows a plot of optical and electrical filter functions. In Fig.2.a1 and Fig.2.b1, it can be seen that the position of the electrical filter depends on the detuning between Tx and Rx lasers. This is because after coherent mixing and opto-electrical conversion, the electrical filter applies to a signal with a zero-frequency at $(F_{Tx}\text{-}F_{Rx})$. Thus, when Tx and Rx lasers are aligned, the electrical filter is centred on the transmitted signal. However, when Tx and Rx are detuned, electrical filter and converted signal are offset by $(F_{Tx}\text{-}F_{Rx})$, which impacts the received signal, measured after digital conversion. Note that the lateral cutoffs of the electrical filter functions correspond to the Nyquist frequency, defined by the sampling frequency of the DAC.

In Fig.2.a2, it can be seen that when the electrical filter is assumed flat, the detuning between Tx and Rx lasers has negligible impact on the spectral envelope of the signal at reception. As a consequence, as depicted in Fig.a3, the detuning of -2GHz between Tx and laser and filter cascade can be deduced - with small error - from the comparison with the reference envelope.

In Fig 2 b2 however, it can be observed that when the experimental electrical filter is considered, the detuning between Tx and Rx has significant impact on the spectral envelope of the received signal. As depicted in Fig. 2 b3, this results in large errors, above 25%, when attempts are made to deduce the centre of the filter cascade from the comparison of the received spectral envelope with a reference.

Thus it can be understood that the ability of such solutions to align a Tx laser with the filter cascade entirely depends on a method for evaluating the centre frequency of the filter cascade which can yield major errors. The study shown in Figure 2 shows that although such solutions have the potential to work in some scenarios, there is scope for implementation of a method which may offer better alignment between Tx laser and filter cascade. Alternative arrangements recognise that one way in which better alignment can be achieved is by properly accounting for other effects, for example, an electrical filter function and Tx/Rx detuning.

Before discussing the embodiments in any more detail, first an overview will be provided.

Arrangements described address the problem of laser and filter cascade misalignment. The implementations described employ a simple method which operates to allow for system adjustment such that both Tx and Rx lasers are substantially aligned with each other and with a filter cascade. Arrangements can be such that they require minimal resource and operate to self-calibrate.

Compared to known techniques for addressing system misalignment, arrangements described may be implemented such that they operate to, for example: determine a Tx frequency which minimizes filter impairments, accounts for Rx electrical filter function, and/or achieves system alignment significantly more accurately under experimental conditions.

Some arrangements are such that an implemented tuning procedure includes safeguards to ensure linear crosstalk between neighboring channels is contained. According to such arrangements, tuning does not affect the neighbouring channels, nor do neighbouring channels affect the retuned channel.

Some arrangements are such that an implemented tuning procedure is threshold-based, thus reacting as fast as possible to detuning issues whilst being operable to free up communication channels within the control plane when no problem is detected.

Arrangements can be based on the monitoring of two parameters at a receiving node (Rx):

- The detuning between the Tx and Rx laser, measured by a CFE block; and
- The first-order moment $M_1$ of a spectral envelope of a signal at the receiving node, measured right-after the ADCs. $M_1$ can also be called the "center of mass" of the spectral envelope.

It will be appreciated that $M_1$ will characteristically be equal to zero when the spectral envelope of a received signal is symmetric. That symmetric scenario will only occur if Tx laser, Rx laser and filter cascade are perfectly aligned. Arrangements operate to try to take steps to change the system such that measurements converge towards a $M_1$ value as close to zero as possible. Arrangements are generally such that they assume $M_1$ vs Tx laser frequency can be very closely approximated to a linear function, for which the slope and ordinate at origin are initially unknown.

According to some arrangements, a tuning procedure can be based on three method steps:

1) Based on the detuning $\Delta F_{CFE}$ between Rx and Tx laser measured by a CFE block of system DSP, the Rx laser can be aligned with the Tx laser. The calculated value of $M_1$ is recorded as $M_{1A}$;
2) Both Tx and Rx lasers are moved by $-2*M_{1A}$. A new value of $M_1$ is calculated and recorded as $M_{1B}$;
3) Both Tx and Rx lasers are moved by $2(M1_A)^2/(M1_B-M1_A)$. $M_1$ is now approximately equal to zero and both Tx and Rx lasers are aligned with the optical filter cascade.

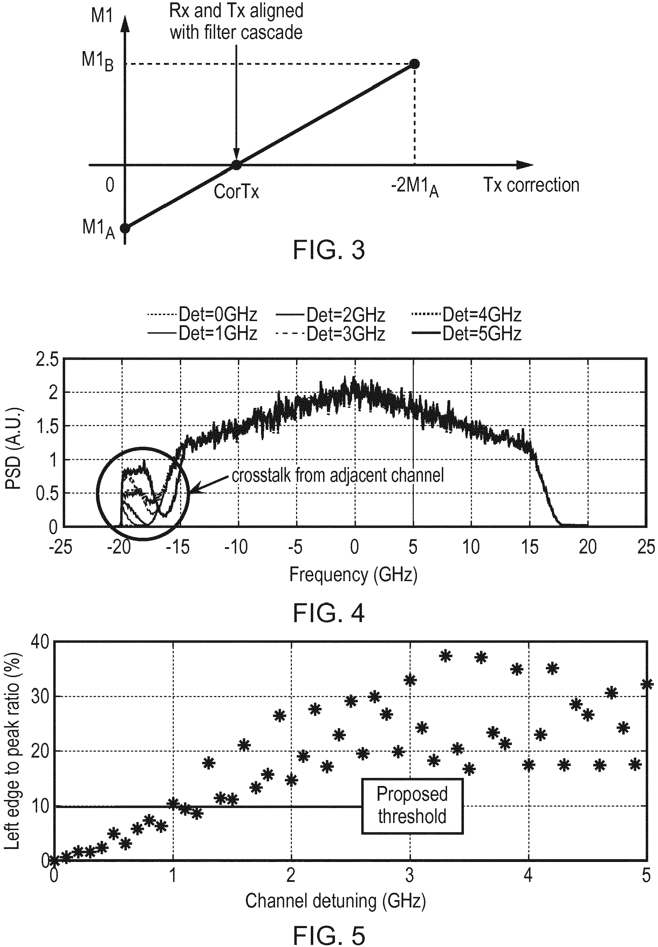

Figure 3 illustrates graphically values of a centre of mass $M_1$ of a spectral envelope of a received signal during various stages of the possible alignment procedure outlined above. By linear interpolation, appropriate correction is deduced from monitored values and can be applied in a final step of a possible procedure.

A system capable of implementing arrangements successfully may generally be such that the following functionality is available: the transponder may be equipped with a monitoring card (MC) able to store, process data and send messages (directly or indirectly) to the Rx laser, and to the Tx laser via the control plane; transponders may be able to finely tune (0.2GHz resolution or below) both Rx and Tx laser frequencies; it may be preferable that the laser tuning can be applied without disrupting laser emission, so that traffic does not have to be interrupted during the alignment procedure. It will be appreciated that this may already be implementable by lasers used in transponder cards, by tuning the laser frequency via current or through laser diode temperature control.

Furthermore, a system capable of implementing arrangements successfully may generally be such that the following functionality is also available: a value of $\Delta F_{CFE}$, the detuning between Tx and Rx measured by the CFE block, may be regularly made available (as an output of ASIC) to the MC; sequences of samples at ADCs outputs may be regularly transferred to the MC; each time samples sequences are refreshed, the MC may be operable to calculate a new $M_1$ value. To this end, it may be configured to apply the following formula:

$$M_1 = \frac{\int_{-R/2}^{R/2} f \cdot S_{Rx}(f) \cdot df}{\int_{-R/2}^{R/2} S_{Rx}(f) \cdot df}$$

Where:

    f is the baseband frequency;
    R is the symbol rate of the lightpath; and
    $S_{Rx}$ is the spectral envelope of the received signal at ADCs output.

The MC may be operable to buffer N values of $\Delta F_{CFE}$ and $M_1$ and record averaged values. According to some arrangements, based on an averaged $\Delta F_{CFE}$, the MC may operate to regularly check (inside a loop) whether $\Delta F_{CFE}$ has passed a predefined threshold. In some arrangements, for example, a threshold value of 0.5GHz can be used. In some arrangements, if $\Delta F_{CFE}$ is below threshold, nothing happens. If $\Delta F_{CFE}$ is above threshold, the MC may be operable to order the Rx to retune by a quantity equal to $\Delta F_{CFE}$.

According to some arrangements, based on an averaged $M_1$, the MC may be configured to regularly compare (inside a loop) the measured value with a predefined threshold. The recommended value for the threshold is also 0.5GHz. If the measured averaged value is below threshold, nothing happens. If it is above threshold, the MC may be configured to take the following steps:

whatever the $\Delta F_{CFE}$ value, the Rx laser is retuned to align with Rx. Once this is achieved, $M_{1A}$ value is recorded as the current average $M_1$ value. Both Tx and Rx are retuned by $-2*M_{1A}$. Once this is achieved, $M_{1A}$ value is recorded as the current average $M_1$ value. Both Tx and Rx are retuned by $2(M_{1A})^2/(M_{1B}-M1_A)$. Once this is achieved, $M_{1A}$ value is recorded as the current average $M_1$ value.

In some arrangements, safeguards are introduced in the control loop to ensure that retuning of Tx and Rx lasers will not affect its own lightpath, or neighbour lightpaths in a DWDM network. Such safeguards can be implemented in various ways, typically with a trade-off between complexity and maximum performance achievable. Safeguarding approaches may not be mutually exclusive and may be employed in parallel to achieve a desired trade-off.

Figure 4 illustrates graphically PSD of a channel of interest in presence of crosstalk from an adjacent channel on a lower frequency. When detuning between a channel and ITU grid increases, crosstalk from adjacent channels increases. At 0GHz-detuning it can be seen channels are 37.5GHz apart;

A first safeguard implementation may comprise: limiting by predefined or updated bounds or increments a maximal amount of frequency correction that can be applied to one or more of the Tx and Rx lasers. If the amount of correction calculated exceeds the bound limitation, then the applied correction may be set to be equal to the closest bound. With proper design of the bounds to be applied, it will be appreciated that such a scheme may ensure that the tuning procedure will not be responsible for any lightpath disruption. It will, however, be appreciated that with reduced bounds, potential gain from the tuning algorithm may be limited, since the algorithm is not free to converge to the best solution (the alignment of Tx and Rx lasers with the filter cascade) in all cases. Nonetheless, implementation of bounds at +/-3 GHz for a 37.5GHz grid appear to be enough to correct most of detuning issues, and not so large as to disrupt other lightpaths. It is worth noting that at any moment, the detuning between Tx and Rx laser must not be superior to the maximum value the CFE block can handle. This constraint depends on the CFE, and can be easily set based on DSP specifications.

A second safeguard implementation is more complex, but may be considered to be more flexible. According to such a scheme, the monitoring of BER of neighbour channels is included in the control loop whilst reconfiguration is active. Since the tuning of the laser frequencies is typically not instantaneous (and it can be purposely made slow) it is possible to monitor, via the control plane, whether and to what extent, the BER of neighbouring channels increases when the procedure is active. An amount of tolerable increase of the BER for neighbour channels can be defined (through a standard, for instance), such that if the amount is exceeded, the control plane may be operable to prevent the tuning algorithm from retuning further. With such a control loop, it is not strictly necessary to bound the potential frequency corrections because the network will learn by itself the appropriate bounds, and update them when necessary. BER monitoring is already a feature in most modern transponders, and centralized control plane protocols such as SDN make the implementation of such a solution possible.

A third safeguard is easy to implement and may comprise an efficient way to monitor impact of a channel undergoing the retuning/alignment procedure on neighbour channels, and to mitigate this impact. The third safeguard may be based on analysis of edges of $S_{Rx}$, the spectral envelope of the received signal at ADCs output. As depicted in Figure 5, if the channel of interest gets closer to an adjacent channel, the power of the adjacent channel progressively appears on one edge of $S_{Rx}$. By monitoring variations of values of $S_{Rx}$, at left and right edges, corresponding to electrical cutoff frequencies, and taking values before the alignment procedure starts as references, it is possible to quantify any impact of the alignment/retuning procedure on adjacent channels.

Such a safeguarding approach is illustrated schematically in Figure 5, where the ratio between $S_{Rx}$ value at left edge (negative cutoff of the electrical filter) and the maximum of $S_{Rx}$ is plotted. That schematic corresponds to the same system which is the subject of Figure 4. It may be understood from Figure 5 that it is possible to propose a maximal value allowed for both left and right edge to peak ratios equal to 10%, corresponding in the example shown to an effective distance between channels approximately equal to 36.5GHz, instead of the 37.5GHz standard.

**Test of arrangements**

Simulations considering the transmission of a 32.5GBd PDM-QPSK channel crossing an optical filter cascade composed of ten filters with 37.5GHz bandwidth were performed. The electrical filter is reproduced from an appropriate experimental characterization. The optical filter function is taken from an experimental characterization of a recent WSS.

The ability of arrangements to converge towards a good alignment between Tx/Rx lasers and a filter cascade was first tested for many repetitions, each time with randomly chosen initial detunings. The algorithm showed robustness in relation to all possible cases of relative detunings between Tx and Rx laser, and between Tx laser and filter cascade. The typical behaviour of the algorithm is illustrated graphically in Figure 4.

According to the tested arrangement,

- In a first method step, a Rx laser is realigned with a Tx laser
- In a second method step, both Tx and Rx lasers may be retuned by the same quantity to obtain an "opposite" detuning between a Tx laser and a filter cascade
- Based on linear interpolation (cf. Fig.3), both Tx and Rx lasers are retuned in a third step to obtain a final alignment, evidenced by $M_1$ reaching a near-zero value.

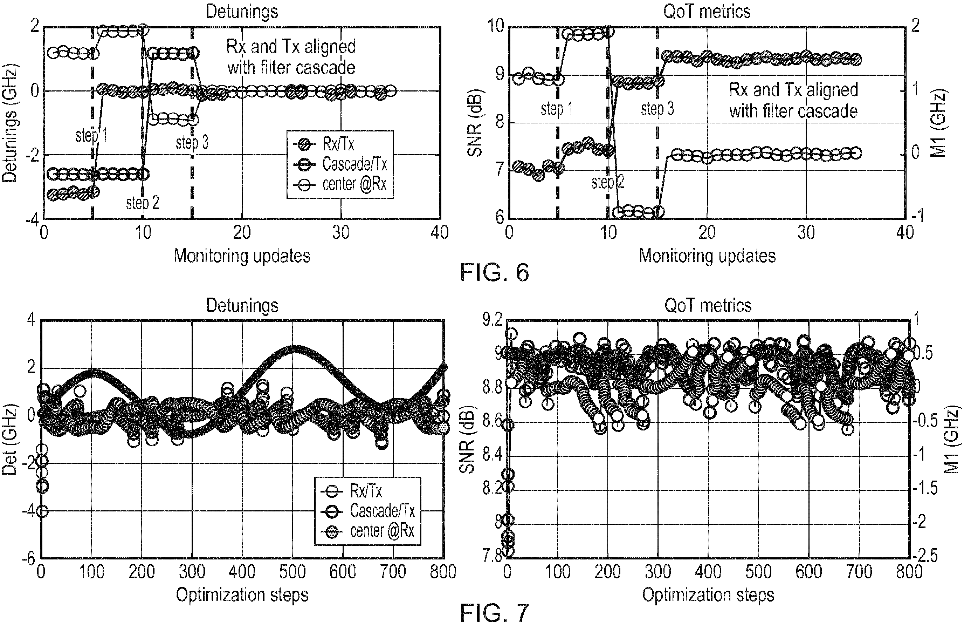

In Figure 6, it can be seen that from an initial state with approximately 2.5Ghz detuning between Tx laser and filter cascade to a final, "aligned" state, performance of the system in terms of SNR was increased by 2.5dB. Such an improved performance obtained with moderate detuning compared to a worst-case (4.5GHz detuning) shows potential gain offered by arrangements to networks where lightpaths cross several routing nodes from source to destination.

In a second simulation, the robustness of arrangements when applied to significant variations of the Tx laser in time (on top of the initial, randomly set, detuning) were assessed. To that end, independently from the alignment algorithm, a steady (linear) variation reproducing the effect of laser ageing; and a sinusoidal variation reproducing the effect of temperature fluctuations, with an amplitude of 2GHz were applied to the Tx laser frequency. Other transmission parameters were the same at those described in relation to the previous simulation.

Figure 7 illustrates graphically results of the second simulation. In the "detunings" plot, the continuous detuning of the Tx laser frequency can be seen. In the "QoT metrics plot", the variation of performance measured in SNR and the variation of $M_1$ value can be observed. After initial alignment where a gain of i.2dB in SNR is observed, it can be seen that continuous variation of Tx laser frequency, however significant, has minor impact on the performance thanks to the alignment procedure according to described arrangements.

It can be observed that the alignment/retuning procedure is triggered each time a calculated absolute $M_1$ value reaches 0.5GHz, and that the alignment/retuning procedure according to arrangements operates such that the $M_1$ value can be rapidly brought down towards 0. Overall, a maximum amplitude of variation in the lightpath of 0.3dB is observed. The simulation illustrates the ability of the alignment/retuning algorithm to strongly mitigate any impact on a system resulting from frequency fluctuations of a Tx laser.

Arrangements may consistently achieve almost perfect alignment whatever the initial detuning between Rx and Tx lasers and the filter cascade. Arrangements can handle typical laser frequency fluctuations resulting from thermal variations and ageing. Some arrangements are such that implementation of a method allows for convergence with a minimum of two Tx laser retuning steps. Some arrangements implement adjustment criteria which are threshold-based. Implementation of a method which can take retuning steps only as required (threshold) and achieve improvement with minimal steps may support minimal use of communication channels between transponder and control plane.

Appropriate implementation of safeguards and one or more thresholds may mean that arrangements are such that they do not add to potential instability of a network. In particular, arrangements may be implemented such that they tend to mitigate potential disruptions that may occur because of frequency detuning issues.

In the case of an arrangement using a threshold-based implementation method, the tuning/adjustment method may be operable to instantaneously react to a shift of the laser whereas a "periodic check" implementation might come too late, resulting in loss of performance, and/or one or more disrupted lightpaths in the network

Arrangements may achieve solid performance and robustness within a system requiring coherent optical transmissions. Arrangements are particularly well suited for implementation in relation to lower cost transponders employing lasers with relaxed constraints on frequency stability. Arrangements are also particularly well suited to networks where lightpaths typically cross a high number of routing nodes from source to destination.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. An optical communication network control method, operable to adjust output wavelength of one or more lasers configured to create a lightpath carrying a signal on a channel between a transmitting node and receiving node in said optical communication network; said method comprising:

   receiving, at said receiving node, a signal being transmitted by one of said lasers at said transmitting node;
   determining an indication of symmetry of a spectral envelope of said received signal at said receiving node; and
   instructing adjustment of output wavelength of said one or more lasers in dependence upon said determined indication of symmetry of said spectral envelope.

2. A method according to claim 1, wherein said determining of an indication of symmetry of a spectral envelope of said received signal at said receiving node comprises: calculating a first order moment of said signal at said receiving node.

3. A method according to claim 1 or claim 2, wherein instructing adjustment of said one or more lasers in dependence upon said determined indication of symmetry of said spectral envelope comprises: instructing adjustment of said one or more lasers an amount directly proportional to said determined indication of symmetry.

4. A method according to any preceding claim, wherein said method comprises:

   determining a further indication of symmetry of a spectral envelope of a further received signal at said receiving node, said further received signal resulting from said instructed adjustment of output wavelength of said one or more lasers; and
   instructing adjustment of output wavelength of said one or more lasers in dependence upon a relationship between instructed adjustment of output wavelength and said determined indication of symmetry, said relationship allowing for selection of an adjustment of said one or more lasers such that said spectral envelope is substantially symmetrical.

5. A method according to any preceding claim, wherein said instructing adjustment of output wavelength comprises instructing an adjustment at said one or more lasers such that said calculated first order moment is substantially zero.

6. A method according to any preceding claim, wherein said method comprises:

   determining an indication of wavelength misalignment between a transmission laser and a reception laser configured to create said lightpath in said optical communication network; and
   instructing a preliminary adjustment of output wavelength of said transmission laser or reception laser in dependence upon said determined indication of wavelength misalignment, before said
   determining of said indication of symmetry of a spectral envelope of said received signal at said receiving node; and
   instructing further adjustment of output wavelength of said transmission laser or reception laser in dependence upon said determined indication of symmetry of said spectral envelope.

7. A method according to any preceding claim, wherein said method comprises:

   maintaining an indication of an average indication of wavelength misalignment between a transmission and reception laser configured to create said lightpath in said optical communication network; and triggering said instruction of output wavelength adjustment if said averaged indication of wavelength misalignment passes a threshold value.

8. A method according to any preceding claim, wherein said method comprises:

maintaining an indication of an average indication of symmetry of said spectral envelope of said received signal at said receiving node and triggering the instruction of adjustment if said averaged indication of symmetry passes a threshold value.

9. A method according to any preceding claim, wherein said step of instructing adjustment of output wavelength is subject to determining whether an adjustment calculated in dependence upon said determined indication of symmetry of said spectral envelope is within a range selected to prevent disruption to one or more adjacent channels between said transmitting node and receiving node.

10. A method according to any one of claims 1 to 8, wherein said method comprises:

monitoring an error rate in one or more adjacent channels between said transmitting node and said receiving node after each said step of instructing adjustment of output wavelength, and preventing further instruction of adjustment of output wavelength if said monitored error rate passes a threshold.

11. A method according to any one of claims 1 to 8, wherein said method comprises:

monitoring a shape of one or more edges of said spectral envelope of said received signal at said receiving node for overlap with adjacent channels between said transmitting node and said receiving node, and preventing further instruction of adjustment of output wavelength if said shape of one or more edges passes a threshold.

12. A method according to any one of claims 1 to 8, comprising preventing instruction of adjustment of output wavelength based on any combination of one or more of the methods set out in claims 9 to 11.

13. A computer program product operable, when executed on a computer, to perform the method of any one of claims 1 to 12.

14. An optical communication network control node, configured to adjust output wavelength of one or more lasers which create a lightpath carrying a signal on a channel between a transmitting node and receiving node in said optical communication network; said network control node comprising:

reception logic configured to receive, at said receiving network control node, a signal being transmitted by one of said lasers at said transmitting node;
determination logic configured to determine an indication of symmetry of a spectral envelope of said received signal at said receiving node; and
adjustment logic configured to instruct adjustment of output wavelength of said one or more lasers in dependence upon said determined indication of symmetry of said spectral envelope.

15. An optical communication network monitoring method for monitoring a lightpath carrying a signal on a channel between a transmitting node and receiving node in said optical communication network; said method comprising:

receiving, at said receiving node, a signal being transmitted by said transmitting node; determining an indication of symmetry of a spectral envelope of said received signal at said receiving node; and
reporting said determined indication of symmetry to a network control node.

Example of metro network

ROADM node for transparent routing

in

bypass

out

filter effect

WSS filter

drop

add

WSS filter

Accumulated filtering = loss of signal quality

FIG. 1

EP 3 531 582 A1

FIG. 2

FIG. 3

FIG. 4

FIG. 5

FIG. 6

FIG. 7

Europäisches
Patentamt

European
Patent Office

Office européen
des brevets

## EUROPEAN SEARCH REPORT

Application Number

EP 18 30 5209

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 104 537 A1 (ALCATEL LUCENT [FR]) 14 December 2016 (2016-12-14) * paragraph [0002] - paragraph [0006]; claims 1-4; figures 1,4 * * paragraph [0011] - paragraph [0014] * * paragraph [0023] - paragraph [0031] * ----- | 1-15 | INV. H04B10/079 H04B10/61 |
| X | US 2015/023674 A1 (SALSI MASSIMILIANO [FR] ET AL) 22 January 2015 (2015-01-22) * paragraph [0006] - paragraph [0009] * * paragraph [0014] - paragraph [0018] * * paragraph [0046] - paragraph [0057]; claims 1-3; figures 4,3 * ----- | 1-15 | |
| A | US 2014/086582 A1 (IWANO TADAYUKI [JP]) 27 March 2014 (2014-03-27) * paragraph [0016] - paragraph [0017] * * paragraph [0034] - paragraph [0037]; figure 10 * * paragraph [0140] - paragraph [0151] * * paragraph [0173] - paragraph [0179] * ----- | 1-15 | |

TECHNICAL FIELDS SEARCHED (IPC)

H04B

The present search report has been drawn up for all claims

| Place of search | Date of completion of the search | Examiner |
|---|---|---|
| Munich | 6 July 2018 | Gäde, Sebastian |

EPO FORM 1503 03.82 (P04C01)

## ANNEX TO THE EUROPEAN SEARCH REPORT
## ON EUROPEAN PATENT APPLICATION NO.

EP 18 30 5209

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2018

| Patent document cited in search report | | Publication date | Patent family member(s) | Publication date |
|---|---|---|---|---|
| EP 3104537 | A1 | 14-12-2016 | NONE | |
| US 2015023674 | A1 | 22-01-2015 | CN 104137445 A | 05-11-2014 |
| | | | EP 2634935 A1 | 04-09-2013 |
| | | | JP 5856696 B2 | 10-02-2016 |
| | | | JP 2015513847 A | 14-05-2015 |
| | | | KR 20140122736 A | 20-10-2014 |
| | | | US 2015023674 A1 | 22-01-2015 |
| | | | WO 2013127622 A1 | 06-09-2013 |
| US 2014086582 | A1 | 27-03-2014 | JP 5708795 B2 | 30-04-2015 |
| | | | JP WO2012153856 A1 | 31-07-2014 |
| | | | US 2014086582 A1 | 27-03-2014 |
| | | | WO 2012153856 A1 | 15-11-2012 |

EPO FORM P0459

For more details about this annex : see Official Journal of the European Patent Office, No. 12/82